# EUROPEAN PATENT APPLICATION

(11) **EP 2 700 993 A1**
(43) Date of publication of application: **26.02.2014**
(21) Application number: 12306011.3
(22) Date of filing: 20.08.2012
(51) Int. Cl.: G02B 6/44

(54) **Optical cable**

(71) Applicant: Nexans, 75008 Paris (FR)
(72) Inventor: Gunnarsson, Magnus, 51470 Grimsas (SE); Manniche, Peter, 51470 Grimsas (SE); Elisson, Peter, 50430 Boras (SE); Hoffren, Pertti, 06100 Porvoo (FI)
(74) Representative: Feray, Valérie

(57) **Abstract**

An optic cable (100) having a longitudinal extension is provided. The optic cable (100) comprises an outer jacket (103) and at least one optical fiber (101) arranged within the outer jacket (103). The at least one optical fiber (102) extends along the longitudinal extension of the cable (100). A lubrication liquid (104) is arranged within said outer jacket (103) and in contact therewith.

## Description

### Technical Field

The present invention relates to an optical cable, and more specifically to an optical fiber cable, suitable for jetting into a microduct, with at least one optical fiber arranged in the lumen of a tubular sheath or jacket.

### Background

Optical fiber cables are well known, and generally comprise a plurality of optical fibers arranged in the lumen of a tubular jacket or sheath of a hard and low frictional material, such as a suitable polymer. The optical fiber in turn normally comprises a core of doped silica in a cladding. Furthermore, the optical fibers are normally embedded in a matrix material within the jacket or sheath. When arranging the optical fiber in its intended environment the jacket or sheath is stripped/removed from the cable to provide easy access to the optical fibers.

US 5,181,268 discloses an optical cable, comprising an optical fiber in a cladding material, which in turn is arranged in a protective coating within a jacket. In between the jacket and the protective coating an interfacial layer is arranged, said interfacial layer comprising a solid lubricant of polytetrafluorethylene or ultra high molecular weight polyethylene and a film forming binder, to facilitate peeling/stripping of the jacket. This layer of the interfacial layer has a thickness between about 4 and about 15 microns. However, due to the relative firmness and rigidity of the interfacial layer high and uneven stress on the fiber cable often results in undesirable loss in optical property, since the stress cannot be distributed along the cable. Additionally, a poorly applied interfacial layer, such as a formation of an interruption in application, may not be subsequently corrected, since the binder fixes the solid lubricant in its applied position. In this situation, the interfacial layer can no longer assist in the provision of water resistance as well as interruption in improved peelability/strippability. Still further, the manufacturing process of an optical cable comprising such an interfacial layer is obliged to comprise steps of application and curing of the interfacial layer.

### Summary

Accordingly, the present invention preferably seeks to mitigate, alleviate or eliminate one or more of the above-identified deficiencies in the art and disadvantages singly or in any combination and solves at least the above mentioned problems by providing an optical cable having a longitudinal extension, comprising an outer jacket; at least one optical fiber arranged within the outer jacket, said at least one optical fiber extending along the longitudinal extension of the cable, and a lubrication liquid, arranged within said outer jacket and in contact therewith.

### Brief Description of Drawings

These and other aspects, features and advantages of which the invention is capable of will be apparent and elucidated from the following description of embodiments of the present invention, reference being made to the accompanying drawings, in which

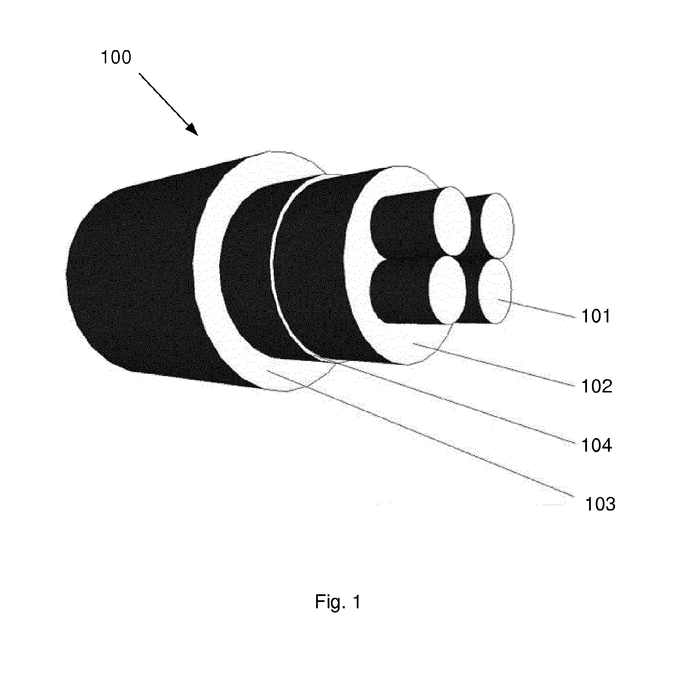

Fig. 1 is a perspective view of a sectionally stripped optical cable according to one embodiment of the present invention.

### Detailed Description

In Fig. 1 a perspective view of a sectionally stripped optical cable 100 of an embodiment of the invention is disclosed. Thus, the optical cable 100 has a longitudinal extension. The optical cable 100 may be an optical cable 100 suitable for jetting into a microduct.

The optical cable 100 comprises four optical fibers 101. The number of optical fibers 101 may however vary, depending on its intended purpose. The number of optical fibers 101 may for example be at least one optical fiber 101, such as between 2 and 6, such as 4.

The optical cable 101 may be an optical cable of known measures, such as an optical fiber with a core of doped silica in a cladding.

The optical fibers 101 are embedded in an easily peelable/strippable matrix material 102, to form a compact fiber unit. This is mainly to meet the requirements on size, but it also aids in water protection. A suitable material for the matrix material 102 is resin materials, such as acrylate polymers or phosphine oxides. Prefarably, the resin material is UV (ultraviolet light) curable, to facilitate the manufacturing process of the optic cable 100 by UV curing the intermediate product comprising optical fibers 101 and matrix material 102. Such UV curable resins may for example be UV curable acrylate polymers or phosphine oxides, such as 1,6-hexanediol diacrylate, exo-1,7,7-trimethylbicyclo[2.2.1]hept-2-yl acrylate, (1-methyl-1,2-ethanediyl)bis[oxi(methyl-2,1-ethanediyl)] diacrylate, and diphenyl(2,4,6-trimethylbenzoyl)phosphine oxide.

In another embodiment, the matrix material 102 is omitted such that the optical fibers 101 are arranged freely in the core of the optical cable.

Peripherally of the compact fiber unit, or the optical fibers 101 in case the matrix material 102 is omitted, an outer sheath or jacket 103 is provided. The material of the jacket 103 is selected such that the optical cable 100 obtains a low frictional and hard outer surface. The low frictional and hard outer surface of the jacket 103 is desired to improve the mechanical properties for protection of the optical fibers 101 as well as achieving long blowing distances into microducts. The material of the jacket 103 may be selected from the list comprising semi-crystalline plastics, such as polyethylenes, polypropylenes, poly (vinyl chloride), polyamides, polyesters, and polyurethanes. Examples of such polymers are high density polyethylene (HDPE), polyamide (PA), and polybutylene terephthalate (PBT). The HDPE may be selected such that its density is from 0.93 to 0.97 g/cm³, such as between 0.94 to 0.97 g/cm³.

Radially inwards of the jacket 103 and radially outwards of the compact fiber unit, or the optical fibers 101 in case the matrix material 102 is omitted, a lubrication liquid 104 is provided. The lubrication liquid 104 is thus provided such that it is in contact inwardly with the compact fiber unit, or the optical fibers 101 in case the matrix material 102 is omitted, and in contact outwardly with the jacket 103. When a lubrication liquid 104 is provided in this manner, the optic cable 100 may to a higher degree withstand stresses, such as for example stresses arising when the jacket 103 is shrunk upon the compact fiber unit or the optical fibers 101, which is especially so when the preferred HDPE is used as jacket 103, since HDPE has higher shrinking properties compared to several other polyethylene types. Naturally, the optic cable 100 will also obtain improved ability to withstand other stresses from outside. Additionally, due to the flowability of the lubrication liquid, interruption of the layer of lubrication liquid 104 will be automatically compensated for. Still further, the lubrication liquid 104 will attain a maintained water sustainability, since interruptions in the layer of the lubrication liquid 104 will be automatically deleted. Furthermore, the lubrication liquid 104 provides for increased peelability/strippability of the jacket 103, without the need of peeling/stripping the lubrication liquid in itself, and only a bath of lubrication liquid 104 is needed to apply the lubrication liquid 104.

The lubrication liquid 104 may be selected from the group selected from list comprising silicone oil, silicones, such as organosilicone compounds, such as polydimethylsiloxane, liquid polyurethanes, or suitable elastomer in a suitable base oil. When the lubrication liquid 104 is a silicone oil or silicone, the flame resistance of the optic cable 100 is improved, since silicone oils and silicones are non-flammable, while simultaneously providing the benefits according to above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An optic cable (100) having a longitudinal extension, comprising an outer jacket (103);
at least one optical fiber (101) arranged within the outer jacket (103), said at least one optical fiber (102) extending along the longitudinal extension of the cable (100), and
a lubrication liquid (104), arranged within said outer jacket (103) and in contact therewith.

2. The optic cable (100) according to claim 1, wherein said lubrication liquid (104) is arranged in contact with said at least one optical fiber (101).

3. The optic cable (100) according to claim 1, wherein said optical fiber (101) is arranged in a matrix material (102) to form a compact fiber unit, said lubrication liquid (104) is arranged in contact with said compact fiber unit.

4. The optic cable (100) according to claim 3, wherein said matrix material (102) comprises acrylate polymer or phosphine oxide.

5. The optic cable (100) according to claim 4, wherein said acrylate polymer or phosphine oxide is selected from the group consisting of 1,6-hexanediol diacrylate, exo-1,7,7-trimethylbicyclo[2.2.1]hept-2-yl acrylate, (1-methyl-1,2-ethanediyl)bis[oxi(methyl-2,1-ethanediyl)] diacrylate, and diphenyl(2,4,6-trimethylbenzoyl)phosphine oxide.

6. The optic cable (100) according to any of the preceding claims, wherein the outer jacket (103) comprises polyethylene, polypropylene, poly (vinyl chloride), polyamide, polyester, and polyurethane, or mixtures thereof.

7. The optic cable (100) according to claim 6, wherein the polyethylene is HDPE.

8. The optic cable (100) according to claim 7, wherein the HDPE is selected such that its density is from 0.94 to 0.97 g/cm³.

9. The optic cable (100) according to any of the preceding claims, wherein said lubrication liquid (104) comprises silicone or silicone oil.

10. The optic cable (100) according to claim 9, wherein said lubrication liquid (104) comprises silicone, and silicone is polydimethylsiloxane.

11. The optic cable (100) according to any of claims 1 to 8, wherein said lubrication liquid (104) comprises an elastomer in a base oil or liquid polyurethane.
